Europäisches Patentamt

European Patent Office

Office européen des brevets

(11) Publication number: **0 336 600**
**A1**

## EUROPEAN PATENT APPLICATION

(21) Application number: **89302771.4**

(22) Date of filing: **21.03.89**

(51) Int. Cl.⁴: **B60T 17/08 , F16B 21/18**

(30) Priority: **26.03.88 GB 8807290**

(43) Date of publication of application:
**11.10.89 Bulletin 89/41**

(84) Designated Contracting States:
**BE DE ES FR IT NL SE**

(71) Applicant: **BENDIX LIMITED**
**Douglas Road**
**Kingswood, Bristol BS15 2NL(GB)**

(72) Inventor: **Jennison, Paul**
**4 Dryleaze**
**Wotton-under-Edge Bristol(GB)**

(74) Representative: **Turner, Alan Reginald**
**c/o Bendix Limited Douglas Road**
**Kingswood, Bristol BS15 2NL(GB)**

(54) **Retention means for components of pressure retaining vessels.**

(57) In a spring brake actuator a head part (3) is retained in an open end of a cylindrical body (1) against the force of a spring (9) by means of a circlip (4) which is trapped between opposingly facing annular surfaces (12, 13), the generator of annular surface (13) of the head part being at a lesser angle to the cylinder axis than the generator of annular surface (12) of the cylindrical body such that the forces on the circlip (4) tend to urge it radially towards its locking position.

FIG.1

# Pressure retaining vessels and retention means for components of pressure retaining vessels

This invention relates to pressure retaining vessels and relates especially but not exclusively to retention means for components of fluid pressure operable brake actuator mechanisms.

In the specification of the United Kingdom Patent No. 1,284,981, there is described a brake actuating mechanism having a cylinder and fluid pressure responsive moveable wall which is sealingly slideable in the cylinder a heavy spring being provided under compression which is captive between the moveable wall and an end cap or head of the actuator. The end cap or head is retained in the end of the cylinder by retention means comprising an internal circlip of rectangular section retained in an annular groove in the internal surface of the cylinder. The periphery of the end cap or head is thus prevented from moving outwards from the end of the cylinder under the force of the spring. Experience with brake actuators has indicated that rigid controls of tolerances and quality of materials of the cylinder and head need to be exercised to ensure the many years of arduous service that such actuators are required to provide.

The present invention seeks to provide improved retention means for such pressure retaining vessels.

According to the present invention there is provided a pressure retaining vessel comprising a cylindrical part and a closure part for an open end of the cylindrical part said parts being assembled together with an end of one part retained inside an end of the other part by said parts having annular surfaces between which a retaining member is trappable and wherein the generator of the annular surface of said one part makes a lesser angle to the cylinder axis than the angle made by the generator of the annular surface of the other part.

In order that the invention may be more clearly understood and readily carried into effect, the same will be further described by way of example with reference to the accompanying drawing of which

Fig. 1 illustrates a fragmental sectional view of a compressed air operable spring brake actuator incorporating retention means in accordance with the invention and

Fig. 2 is an enlarged view of part of Fig. 1.

Referring to the drawing, the spring brake actuator has a main cylindrical body part denoted by reference 1. Within an open end 2 thereof there is a closure member or head part 3, retained by means of a retaining member in the form of a circular section wire circlip 4. Located inwardly of the retaining member 4 there is an annular seal 16 for preventing ingress of contaminants.

Sealingly moveable within the wall 5 of the cylinder, there is a moveable wall in the form of a piston 6 which carries a tubular output member 7. Body 1, closure member 3, piston 6 and member 7 have a common axis 1a. The member 7 passes through a seal in the other end of the cylinder (not shown) to apply output force in the direction of arrow 15, to a brake lever when fluid pressure denoted by arrows 8 is reduced sufficiently for a heavy spring 9 to move the piston 6 to the right.

The heavy spring 9 is shown in the drawing in its fully compressed condition and the piston 6 rests with its annular abutment surface 10 in engagement with a complimentary abutment surface 11 of the inner end of the closure member 3.

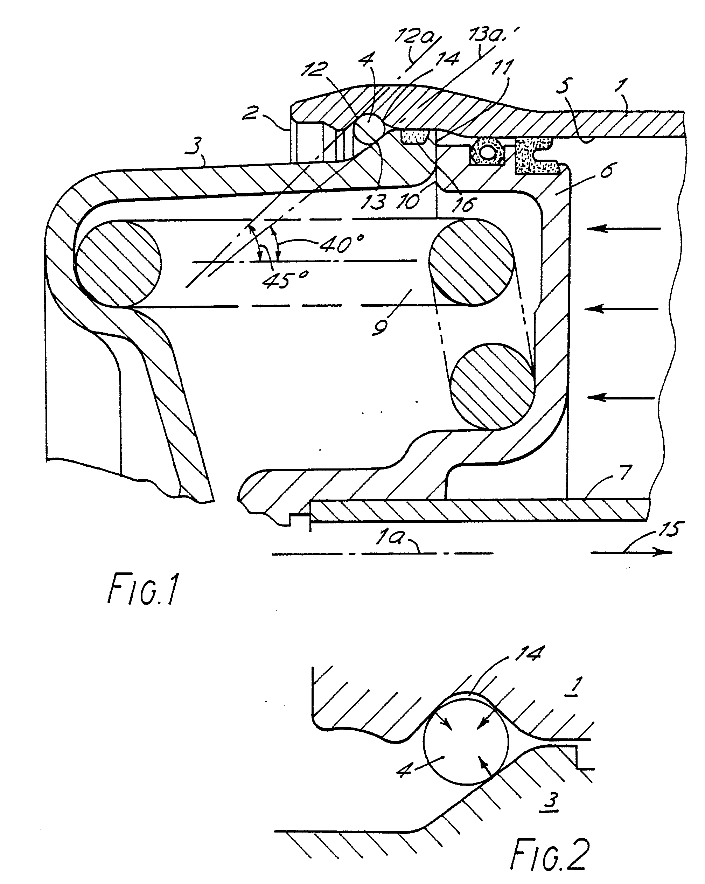

In accordance with the particular feature of an actuator employing the invention, the wire circlip 4 is trapped between first and second annular surfaces 12 and 13 of the cylinder 1 and the closure member 3 respectively. More particularly, respective generators 12a and 13a of the annular surfaces 12 and 13 are at 45° and 40° respectively of the cylinder. By virtue of the angle of the annular surface carried by the closure member being less than the angle of the annular surface carried by the cylinder, the reaction forces generated between the circlip 4 and the respective components 1 and 3 as shown in Fig. 2 are such as always to tend to drive the annular circlip 4 radially into its locking position in a retaining groove 14 in the inner surface at one end of the cylinder. The assembly is thereby rendered very secure. Moreover, it is clearly only necessary to compress the closure member 3 a short distance into the cylinder 1 to permit radially inward movement of the annular circlip 4 from this groove. For the purposes of dismantling or servicing the actuator it is therefore mounted in a suitable jig whereby the head is depressed inwards to provide sufficient clearance between the surfaces 12 and 13 to permit removal of the circlip 4.

By virtue of the mutually opposed faces 12 and 13, between which the circlip 4 is trapped being such as to tend to urge the circlip into its locking condition at all times during use of the actuator, any tendency for slight relative movement of parts 1 and 3 as permitted by manufacturing tolerances, is prevented from causing the circlip 4 to work its way out outwards towards a less safe condition.

## Claims

1. A pressure retaining vessel comprising a cylindrical part (1) and a closure part (3) for an open end of the cylindrical part (1) said parts being assembled together with an end of one part (3) retained inside an end of the other part (1) by said parts having annular surfaces (12, 13) between which a retaining member (4) is trappable and characterised by the generator (13a) of the annular surface (13) of said one part making a lesser angle to the cylinder axis (1a) than the angle made by the generator (12a) of the annular surface (17) of the other part.

2. A brake actuating mechanism comprising a cylindrical main body (1) and a head part (3) for an open end of said body and a moveable wall (6) sealingly slideable and a spring (9) under compression between the wall and the head part (3) said parts being assembled together with said head retained within the open end of the body (1) by virtue of said parts having opposingly facing annular surfaces between which a retaining member (4) is trapped characterised by the generator (13a) of the annular surface (13) of the head (3) making a lesser angle to the axis (1a) of the cylindrical body (1) than the angle made by the generator (12a) of the annular surface (12) of the cylinder.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | US-A-3 218 939 (CRUSE) * Column 3, lines 11-40; figure 2 * | 1,2 | B 60 T 17/08 F 16 B 21/18 |
| Y | FR-A-2 179 295 (ATELIERS METALLURGIQUES) * Whole document * | 1,2 | |
| A | US-A-4 351 450 (SUMMERFIELD) * Whole document * | 1 | |
| A | US-A-3 240 129 (CRUSE) * Columne 3, lines 52-69; figure 2 * | 1 | |

TECHNICAL FIELDS SEARCHED (Int. Cl.4)

B 60 T 17/00
F 16 B 21/00

The present search report has been drawn up for all claims

| Place of search | Date of completion of the search | Examiner |
|---|---|---|
| THE HAGUE | 07-07-1989 | HARTEVELD C.D.H. |